# EUROPEAN PATENT APPLICATION

(11) **EP 4 597 384 A1**
(43) Date of publication of application: **06.08.2025**
(21) Application number: 24154869.2
(22) Date of filing: 31.01.2024
(51) Int. Cl.: G06Q 10/0639, G06Q 10/105

(54) **PLATFORM-DRIVEN METHOD, PROCESS, AND SYSTEM FOR LEADERSHIP TRANSFORMATION**

(71) Applicant: Klyuchnikov, Daniil, 65929 Frankfurt am Main (DE)
(72) Inventor: Klyuchnikov, Daniil, 65929 Frankfurt am Main (DE)

(57) **Abstract**

This invention introduces a method, process, and system driven by a software-as-a-service platform and tailored for transformation of individuals in managerial or supervisory roles within an organization who are responsible for overseeing and leading team(s) - hereinafter referred to as 'Leaders'.

This method, supported by a multi-staged process and system, empowers organizations to measure, understand, control, and improve their leadership effectiveness key performance indicators, including the Self-Awareness Gap, Value, and Constraint Scores of Leaders. It is realized through a series of assessments, during which, along with other interventions, an individual's Leadership Profile, consisting of 5 dimensions and 20 sub-dimensions, is modified.

By applying the method, process, and system, organizations can effectively reduce the Self-Awareness Gaps and Constraint Scores of their Leaders while enhancing their Value Scores, thereby increasing leadership effectiveness and productivity. These changes may have a positive transformative impact not only on Leaders but also on overall organizational performance and corporate culture.

## Description

### Table of Content

| | | |
|---|---|---|
| Table of Content | | 2 |
| 1. Abstract | | 3 |
| 2. Method | | 3 |
| | 2.1. Leadership Profile | 4 |
| | 2.2. Self-Awareness Gap | 5 |
| | 2.3. Value Score and Constraint Score | 5 |
| | 2.4. Measurement of Self-Awareness Gap, Value and Constraint Scores | 5 |
| 3. Process | | 6 |
| 4. System | | 9 |
| 5. Key Transformation Points | | 10 |
| 6. Summary | | 10 |

### 1. Abstract

This invention introduces a method, process, and system driven by a software-as-a-service platform and tailored for transformation of individuals in managerial or supervisory roles within an organization who are responsible for overseeing and leading team(s) - hereinafter referred to as 'Leaders'.

This method, supported by a multi-staged process and system, empowers organizations to measure, understand, control, and improve their leadership effectiveness key performance indicators, including the Self-Awareness Gap, Value, and Constraint Scores of Leaders. It is realized through a series of assessments, during which, along with other interventions, an individual's Leadership Profile, consisting of 5 dimensions and 20 sub-dimensions, is modified.

By applying the method, process, and system, organizations can effectively reduce the Self-Awareness Gaps and Constraint Scores of their Leaders while enhancing their Value Scores, thereby increasing leadership effectiveness and productivity. These changes may have a positive transformative impact not only on Leaders but also on overall organizational performance and corporate culture.

### 2. Method

The essence of the method lies in an initial assessment, follow-up interventions, further tracking, and reassessment of Leaders to facilitate their transformation and enhance their effectiveness. This is achieved by establishing a robust feedback process, where Leaders receive regular feedback from 10 to 15 internal and external stakeholders (referred to as 'Raters').

The anonymous feedback is implemented through a Multi-Dimensional Leadership Assessment, consisting of 145-146 questions: 140 scored questions and 5 to 6 written comments from external stakeholders and internal stakeholders, respectively. Each answer to the 140 questions is scored by both the Leader and their Raters on a scale from 1 to 10.

Within the process, each set of 7 scored answers impacts one of the 20 sub-dimensions described below, and each set of 28 scored answers impacts one of the 5 dimensions of the Leadership Profile covered in the following section. The written comments are used to provide context for the received scores.

In between the Multi-Dimensional Assessments, a follow-up tool called the Midpoint Review is used, which is covered in Section 3.

The Value Score, Constraint Score, and Self-Awareness Gap represent an innovative approach for organizations to measure, understand, control, and improve key performance indicators of their leadership effectiveness.

### 2.1. Leadership Profile

The Leadership Profile is structured into 5 core dimensions: Character, Emotional Intelligence, Leadership Proficiency Traits, Dominance, and Insecurities. Each dimension is further divided into 4 sub-dimensions, resulting in a total of 20 distinct elements.

While some dimensions (e.g., Emotional Intelligence, Dominance) and their sub-dimensions are already well-described by numerous studies as highly predictive of leadership effectiveness and performance, the comprehensive structure of the Leadership Profile presented here, which forms the core of the Multi-Dimensional Leadership Assessment, is entirely new. Below are the dimensions and their respective sub-dimensions.
**1. Character**
   a. Integrity
   b. Passion for Work
   c. Resilience
   d. Leadership Purpose
**2. Emotional Intelligence**
   a. Self-Awareness
   b. Social Awareness
   c. Self-Control
   d. Relationships
**3. Leadership Proficiency Traits**
   a. Direction Setting
   b. Teamwork
   c. Execution
   d. Effectiveness
**4. Dominance**
   a. Hostility
   b. Need for Control
   c. Rigidity
   d. Rivalry
**5. Insecurities**
   a. Validation Seeking
   b. Dependence
   c. Anxiousness
   d. Lack of Self-Confidence

Please find below the graphical guide to the Leadership Profile, including red and green lines connecting the values, which demonstrate the Self-Awareness Gap of a Leader described below.

### 2.2. Self-Awareness Gap

The distance between the two values of the Leadership Profile represents Self-Awareness Gap or so-called leadership blind spots. These gaps demonstrate the differences between how the Leader sees themselves (e.g., as a strong team player with low fear- and anger-driven factors) and how raters perceive them (e.g., hostile person who undermines teamwork). The greater the distance, the stronger the negative impact on effectiveness and performance of Leaders.

By combining self-assessment with aggregated feedback from Raters, a Leader can gain a precise understanding of disparity between their self-perception and how others perceive them.

### 2.3. Value Score and Constraint Score

The Value Score is a key performance indicator that positively influence the effectiveness and performance of a Leader. It comprises Character, Emotional Intelligence, and Leadership Proficiency, along with their respective sub-dimensions. The higher score indicates a more effective Leader.

In contrast, the Constraint Score, which includes Dominance, Insecurities, and their sub-dimensions, hinders both leadership effectiveness and performance. The higher the Constraint Score, the less effective the Leader, and the greater the negative impact on teams.

### 2.4. Measurement of Self-Awareness Gap, Value and Constraint Scores

The Value Score, comprising 3 dimensions, 12 sub-dimensions, and 84 questions, requires the calculation of the average evaluation given by all Raters. For example, if question 1 receives a score of 10, question 2 - 8, question 3 - 6, and so on, the average would be calculated as (10 + 8 + 6 + ...) / 84, where 10 indicates excellent and 1 indicates poor score.

The same approach, though with different interpretations, is applied to the Constraint Score, which consists of 2 dimensions, 8 sub-dimensions, and 56 questions. For instance, question #1 might receive a score of 2, question 2 - 4, question 3 - 6, and so forth. The average is calculated as (2 + 4 + 6 + ...) / 56, where 1 indicates excellent and 10 indicates poor score.

It is worth noting that the Leader's self-assessment is not included in either the Value or Constraint Scores. Both are constructed purely based on the feedback from Raters.

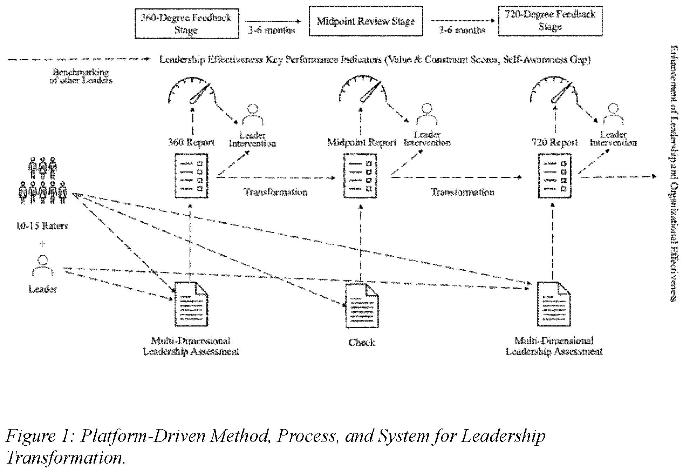

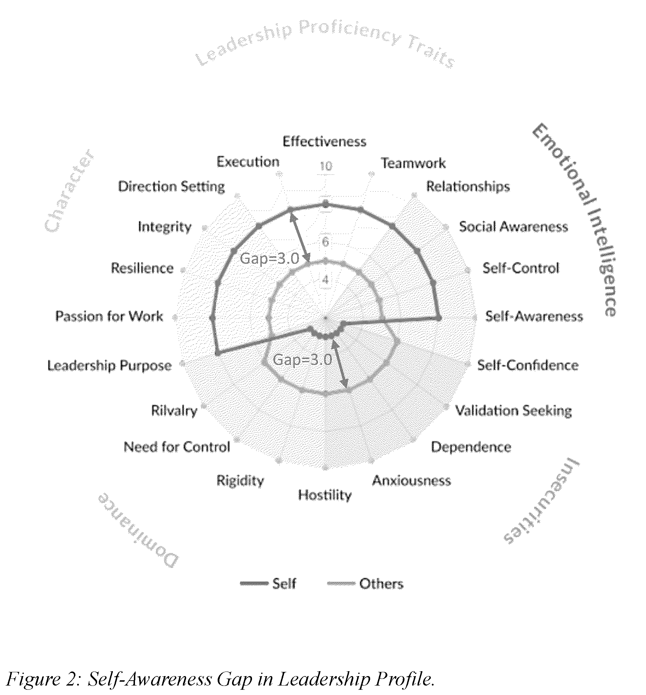

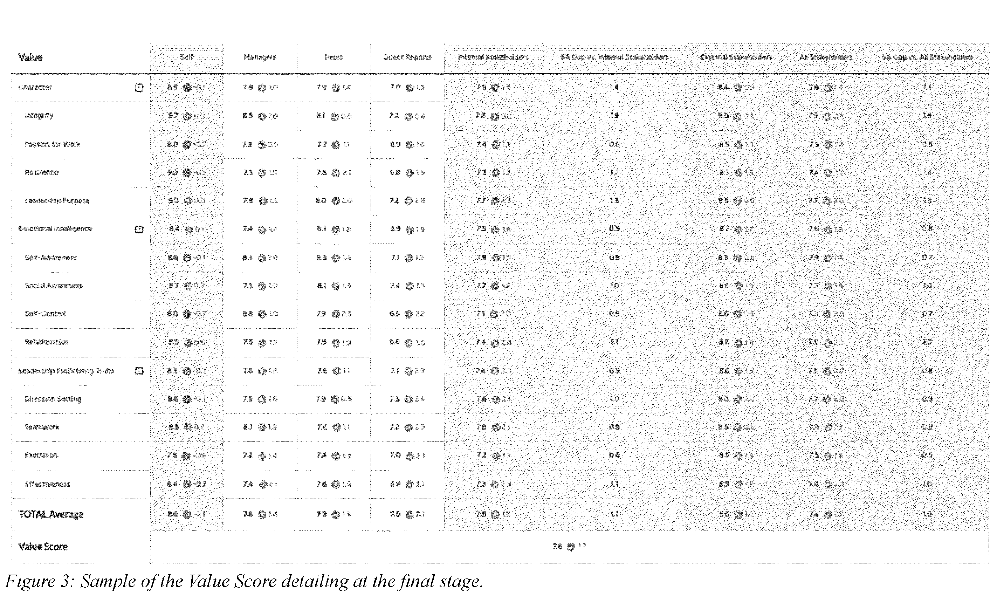

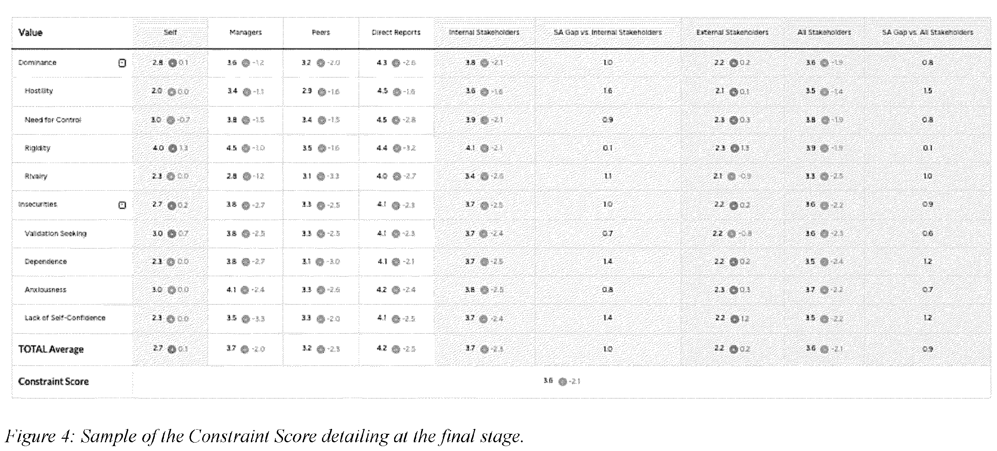

The third key performance indicator - Self-Awareness Gap - is calculated as the difference between the Leader's self-assessment and the aggregate assessment of the Raters. Considering both scores as 100% (i.e., 140 questions), the Value Score accounts for 60% (84 questions), and the Constraint Score for 40% (56 questions). Therefore, if a Leader rates themselves as 8 for the Value Score and 3 for the Constraint Score, while their accumulated Raters' assessment gives them 5 for the Value Score and 6 for the Constraint Score, the Self-Awareness Gap is calculated as follows: (8-5) * 0.6 + (6-3) * 0.4 = 1.8 + 1.2 = 3.0 (Figure 1).

It is important to understand the nature of the observed gaps. Are they selfinflating, indicating that a Leader tends to overestimate some of their behaviors in contrast to their Raters? Or are they self-depreciating, suggesting that the Leader tends to underestimate their capabilities?

### 3. Process

The first stage, or the 360-Degree Feedback, involves the initial Multi-Dimensional Leadership Assessment, which gathers answers from both a Leader and their Raters to establish the as-is Leadership Profile. This phase aims to identify the bottlenecks affecting the Leader's effectiveness and performance, as indicated by the key performance indicators described above. The outcomes are shared in the form of a 360 report with the Leader and an assigned person in the organization they work for (e.g., People and Culture Director). The objective of this phase is to help the Leader see what they cannot see, document their reflections, and define their goals and plans for change.

The second stage, typically conducted 3 to 6 months after the initial one, is called the Midpoint Review. Through 4 scored and 5 written-required questions to Raters, the Leader's efforts are assessed and shared in the form of a Midpoint Report. It demonstrates to both the Leader and their employer the progress made toward the committed goals.

The final stage, or the 720-Degree Feedback, conducted 3 to 6 months after the Midpoint Review, involves repeated Multi-Dimensional Leadership Assessment to compare the Value Score, Constraint Score, and Self-Awareness Gap of the leader with those of the initial phase. The outcomes are compiled into a 720 report and shared with the Leader and their employer.

Throughout the process, the organization is empowered to measure, understand, control, and improve key performance indicators of leadership effectiveness at both individual (i.e., Leader's) and group (e.g., departmental) levels.

Please find below sample figures from the final 720-Degree Feedback stage demonstrating the comparisons of some key performance indicators at the first and the last phases.

### 4. System

The system comprises interconnected components working together for leadership transformation and embodied in the Leadership Transformation Platform. This software-as-a-service solution is designed to implement described method and process, benefiting leaders and their organizations.

The platform boasts an intuitive interface, excellent tracking and reporting tools. It is available on the website https://www.meaningful-performance.software/, hosted in Germany.

### 5. Key Transformation Points

Among the key transformation points generated by the method, the process, and the system, are the following five:
1. The first point involves sparking a demand for change, typically emerging from a Leader after receiving and reading a 360 Report. It assists the Leader in constructing a rationale for their change or addresses the question of why change is necessary.
2. The second point is the initial coaching session within the process, which elaborates on this demand for change, adds a sense of urgency to it, helps Leaders better understand their genuine selves, and facilitates certain steps and check-ins along the transformative journey.
3. The third point is the disclosure stage, where Leaders are asked to share what they have learned about themselves with their Raters and seek their help for additional feedback (e.g., when soliciting 1:1 regular feedback from a manager or a peer).
4. The fourth point arises while reading through Raters' feedback in the Midpoint Review. It is the time when efforts are already assessed, and the Leader is expected to show initial results. The transparency of the data to the employer adds supplementary arguments for change.
5. The fifth point is related to the final stage when adjustments in the Leadership Profile are available, and the final feedback is received from the Raters.

All five points are carefully defined and tracked during the described process, ensuring transparency both for the Leader and their employer.

### 6. Summary

The method, process, and system together form the core innovation, providing a structured approach and tools to enhance leadership effectiveness and organizational productivity.

The goal of this innovation is to improve leadership performance and organizational outcomes, ultimately contributing to broader societal benefits such as economic growth and social cohesion.

The Leadership Profile assesses the performance bottlenecks of Leaders, helping them develop their self-awareness, crystallize their leadership purpose, and identify their strengths.

The multi-staged process supports them in successfully navigating transformation and making a positive impact for their teams.

The key performance indicators, such as the Value Score, Constraint Score, and Self-Awareness Gap are developed to measure and improve leadership effectiveness and performance progress.

A dedicated platform supports the implementation of the method and process, making it easier for leaders to manage and track their development efforts.

In summary, this holistic innovation offers a comprehensive approach to leadership transformation, with the potential to drive positive change both within organizations and in society at large.

## Claims

1. **The method,** supported by a multi-staged process and system, together empower organizations to measure, understand, control, and improve their leadership effectiveness Key Performance Indicators (KPIs). It is realized through Multi-Dimensional Leadership Assessments, where an individual's Leadership Profile is established, measured, and gradually transformed alongside other interventions.
The method, process, and system form a core innovation, providing a structured approach and tools to enhance leadership effectiveness and organizational productivity. The goal of this innovation is to improve leadership performance and organizational outcomes, ultimately contributing to broader societal benefits such as economic growth and social cohesion.

2. **The Leadership Profile** is structured into 5 core dimensions, which are Character, Emotional Intelligence, Leadership Proficiency Traits, Dominance, and Insecurities. Each dimension is further divided into 4 sub-dimensions, resulting in a total of 20 distinct elements.
While some dimensions (e.g., Emotional Intelligence, Dominance) and their sub-dimensions are already well-described by numerous studies as highly predictive of leadership effectiveness and performance, the comprehensive structure of the Leadership Profile presented here, which forms the core of the Multi-Dimensional Leadership Assessment, is entirely new.

3. **Self-Awareness Gap, Value Score,** and **Constraint Score** are three KPIs that are applied to measure leadership effectiveness and change. They provide insights into a leader's self-perception, and their impact on personal and organizational productivity. The KPIs represent an innovative way for organizations to measure, understand, control, and improve leadership effectiveness.
The above-mentioned claims encapsulate a comprehensive approach involving assessment, intervention, and ongoing monitoring to enhance leadership effectiveness through leadership transformation.
